(19) Europäisches Patentamt
European Patent Office
Office européen des brevets

(11) **EP 2 499 073 B1**

(12) **FASCICULE DE BREVET EUROPEEN**

(45) Date de publication et mention de la délivrance du brevet:
**17.07.2013 Bulletin 2013/29**

(21) Numéro de dépôt: **10781941.9**

(22) Date de dépôt: **19.10.2010**

(51) Int Cl.:
**B65G 53/16** (2006.01)     **B65G 53/20** (2006.01)

(86) Numéro de dépôt international:
**PCT/FR2010/000692**

(87) Numéro de publication internationale:
**WO 2011/055026 (12.05.2011 Gazette 2011/19)**

(54) **DISPOSITIF A FLUIDISATION POTENTIELLE, DESTINE AU CONVOYAGE DE MATERIAUX PULVERULENTS EN LIT HYPERDENSE**

POTENZIELLE FLUIDISIERUNGSVORRICHTUNG ZUR FÖRDERUNG VON PULVERMATERIALIEN AUF EINEM HYPERDENSEN BETT

POTENTIAL FLUIDIZATION DEVICE FOR CONVEYING POWDER MATERIALS ONTO A HYPERDENSE BED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2009 FR 0905372**

(43) Date de publication de la demande:
**19.09.2012 Bulletin 2012/38**

(73) Titulaire: **Rio Tinto Alcan International Limited Montréal, QC H3A 3G2 (CA)**

(72) Inventeurs:
• **PETIT, Goeffrey**
  **F-13790 Peynier (FR)**
• **HEMATI, Mehrdji**
  **F-31860 Pins Justaret (FR)**
• **ROUSSEAUX, Jean-Marc**
  **F-13100 Aix en Provence (FR)**

(74) Mandataire: **Mérigeault, Thierry Louis Henri**
  **Rio Tinto France SAS**
  **Industrial Property Department**
  **725, rue Aristide Bergès**
  **BP25 Voreppe**
  **38341 Moirans Cedex (FR)**

(56) Documents cités:
**WO-A2-2009/010667    DE-B- 1 094 661**
**DE-B- 1 150 320**

## Description

L'invention concerne un dispositif clos à fluidisation potentielle pour le convoyage horizontal ou incliné de matériaux possédant les caractéristiques de pulvérulents fluidisables, depuis une zone de stockage jusqu'à au moins une zone à alimenter, éloignées l'une de l'autre, typiquement de quelques centaines de mètres.

L'invention concerne en particulier un dispositif clos à fluidisation potentielle pour le transport et l'alimentation de "capacités-réserves" en produit pulvérulent, comme de l'alumine par exemple, permettant d'alimenter en continu, à partir d'une unique zone de stockage dudit matériau pulvérulent, un ensemble de conditionnement tel qu'une ensacheuse, ou un ensemble de production tel qu'une extrudeuse ou une série de cuves d'électrolyse ignée.

Par matériaux fluidisables, on entend définir tous les matériaux bien connus de l'homme de l'art se présentant sous une forme pulvérulente, les grains présentant une cohésion et une taille granulométrique telles que la vitesse de passage de l'air insufflé à travers la masse pulvérulente provoque, à vitesse faible, la décohésion des particules entre elles et la réduction des forces de frottement interne. De tels matériaux sont, par exemple, l'alumine destinée à l'électrolyse ignée, les ciments, plâtres, la chaux vive ou éteinte, les cendres volantes, les poussières de charbon, les cristaux de sels tels que fluorure de calcium, sulfate de sodium, phosphate ..., les granulats de matériaux plastiques, les produits alimentaires tels que lait en poudre, farine, etc......

L'invention concerne également un dispositif destiné au transport de matériaux pulvérulents sur une distance longue, typiquement supérieure à un kilomètre.

Le dispositif de transport de matériaux pulvérulents mis au point par la demanderesse et décrit dans le brevet européen EP Û 179 055 permet une alimentation en continu de matières solides pulvérulentes en phase hyperdense. Il sert notamment à alimenter en alumine, de façon régulière et continue, les trémies de stockage et de distribution situées dans la superstructure des cuves d'électrolyse. C'est un dispositif à fluidisation potentielle. Comme en fluidisation classique, ce dispositif comprend, entre la zone de stockage et la zone à alimenter, au moins un convoyeur horizontal, appelé aérocanalisation, constitué par un canal inférieur destiné à la circulation d'un gaz, un canal supérieur destiné à la circulation du matériau pulvérulent et du gaz, les deux canaux étant séparés par une paroi poreuse, à travers laquelle ledit gaz peut passer. Le canal inférieur est alimenté en gaz par au moins une tubulure d'alimentation. Contrairement à ce qui se fait en fluidisation classique, le matériau pulvérulent remplit complètement le canal supérieur du convoyeur et ce convoyeur est muni d'au moins une colonne d'équilibrage remplie partiellement de matériau pulvérulent, la hauteur de remplissage de la suspension solides/gaz équilibrant la pression du gaz. Cette colonne d'équilibrage permet de créer des conditions de fluidisation potentielle du matériau pulvérulent. Ce dernier, peu remué en raison du très faible débit du gaz, se présente dans l'aérocanalisation sous la forme d'un lit hyperdense.

Pour bien comprendre la fluidisation potentielle, il est utile de rappeler ce qu'est la fluidisation classique, habituellement pratiquée pour le convoyage de matériaux pulvérulents, et décrite par exemple dans le brevet US 4 016 053. Le dispositif employé en fluidisation comporte également une aérocanalisation, telle que celle décrite précédemment. Le gaz de fluidisation est introduit sous une pression donnée $p_f$ dans le canal inférieur, traverse ladite paroi poreuse, puis passe entre les particules au repos du matériau pulvérulent formant la couche à fluidiser. Contrairement au dispositif à fluidisation potentielle décrit dans EP 0 179 055, l'épaisseur de cette couche au repos est très inférieure à la hauteur du canal supérieur dudit convoyeur, c'est-à-dire qu'en l'absence de toute injection de gaz de fluidisation, le matériau pulvérulent ne remplit que très partiellement le canal supérieur du convoyeur horizontal. En imposant un débit de gaz important, lesdites particules sont mises en mouvement et soulevées, chacune d'entre elles perdant les points de contact permanent avec ses voisines. Par ce moyen, l'espace interstitiel existant entre les particules augmente, les frottements internes entre particules sont réduits et ces particules sont mises dans un état de suspension dynamique. De ce fait, il en résulte une augmentation du volume initial du matériau pulvérulent et, corrélativement, une diminution de la densité apparente, puisqu'il se forme une suspension d'une phase solide dans une phase gazeuse.

La densité apparente du matériau est donc plus faible, comparée à celle que l'on rencontre en fluidisation potentielle, telle que celle décrite dans EP 0 179 055, où l'on parle de phase hyperdense. Le terme de "phase dense" est généralement réservé au transport pneumatique à haute pression. La phase hyperdense est caractéristique de la fluidisation potentielle. Pour fixer les idées, on considère par exemple dans le cas de l'alumine Al2O3 que le rapport solide/gaz est de l'ordre de 10 à 150 kg $Al_2O_3$ / kg air dans le transport pneumatique en phase dense et de 750 à 950 kg $Al_2\text{-}O_3$/ kg air pour le transport par fluidisation potentielle en phase hyperdense. La phase hyperdense permet donc de transporter le solide pulvérulent à des concentrations solide/gaz très importantes, nettement plus élevées que la phase dense en transport pneumatique.

Dans le cas de la fluidisation potentielle, même lorsqu'il n'y a pas injection de gaz, le matériau pulvérulent remplit presque complètement le canal supérieur. Lorsque le gaz est introduit dans le canal inférieur, la colonne d'équilibrage se remplit partiellement du matériau pulvérulent occupant le canal supérieur, selon une hauteur manométrique qui équilibre la pression pf et interdit l'accroissement des interstices entre les particules. De ce fait, la présence de colonne d'équilibrage interdit la fluidisation du matériau pulvérulent présent dans le convoyeur horizontal et oblige ledit matériau à se présenter sous l'aspect d'un lit hyperdense à fluidisation potentielle. En outre, comme la distance interstitielle entre les particules n'augmente pas, la perméabilité du milieu au gaz introduit sous la pression pf est très faible et limite l'écoulement gazeux à un très petit débit. On appelle "dégazage" cet écoulement gazeux à faible débit qui traverse la colonne d'équilibrage. Par exemple, la vitesse du gaz en circulation correspondant à une pression de fluidisation $p_f$ de 80 millibars et provoquant la fluidisation de l'alumine pulvérulente est de l'ordre de 33. $10^{-3}$ m.s$^{-1}$ dans le dispositif décrit dans US 4 016 053, alors que, dans le dispositif à fluidisation potentielle de EP 0 179 055, la vitesse du gaz en circulation est seulement de l'ordre de 4. $10^{-3}$ m.s$^{-1}$. Cette vitesse est trop faible pour pouvoir provoquer la fluidisation de l'alumine dans l'ensemble du convoyeur.

Il n'y a pas fluidisation mais on peut bien parler de fluidisation potentielle: s'il n'y a pas circulation permanente du matériau dans l'aérocanalisation, il y a écoulement par éboulements successifs dès que le besoin en matériau pulvérulent se fait sentir, par exemple lorsque le niveau de la zone à alimenter descend en-dessous d'une valeur critique. En effet, lorsque la consommation continue du matériau stocké dans la zone à alimenter est telle que le niveau du matériau baisse et arrive en-dessous de l'orifice de la canalisation d'alimentation, une certaine quantité du matériau pulvérulent s'échappe de la canalisation, en créant un "vide" qui se remplit par un éboulement du matériau, éboulement qui en entraîne un autre en amont et se reproduit ainsi de proche en proche dans l'aérocanalisation en remontant vers le silo de stockage.

Le dispositif à fluidisation potentielle de convoyage en lit hyperdense, tel que décrit dans EP 0 179 055, est exploité à grande échelle, notamment pour alimenter les cuves des installations récentes de production d'aluminium par electrolyse ignée. Le brevet EP-B-1 086 035 décrit un perfectionnement du dispositif précédent dans lequel la partie supérieure du canal supérieur de l'aérocanalisation est munie en certains endroits de barrages, par exemple sous forme de fers plats perpendiculaires à la paroi de ladite partie supérieure, qui contribuent à la création et au maintien durable, dans la partie supérieure du canal supérieur de l'aérocanalisation, de bulles de gaz adjacentes au sein de chacune desquelles règne une pression de bulle lorsque ladite aérocanalisation est alimentée en gaz de fluidisation sous pression de fluidisation potentielle. La demanderesse avait en effet constaté que la création de bulles de gaz sous pression permettait de rendre le fonctionnement de l'aérocanalisation plus stable.

Dans la demande de brevet internationale WO2009/010667 , qui décrit un dispositif selon le préambule de la revendication 1, la demanderesse précise les conditions optimales dans lesquelles un tel dispositif peut être utilisé avec le minimum de risque de ségrégation du matériau pulvérulent au cours de son transport.

Forte des succès importants rencontrés par ce type de dispositif, en particulier par son emploi presque systématique dans la plupart des installations récentes d'électrolyse d'aluminium, la demanderesse a cherché à améliorer encore la solution apportée par le convoyage en phase hyperdense. En particulier, elle a engagé des essais destinés à tester les limites du système, de façon à mieux cerner les paramètres importants qui permettent d'une part d'assouplir les conditions d'utilisation de telles aérocanalisations, d'autre part de simplifier leur conception et leur fabrication.

Un premier objet de l'invention est un dispositif permettant de transporter un matériau pulvérulent, entre une zone d'alimentation, typiquement une zone de stockage dudit matériau pulvérulent, et au moins une zone à alimenter, comprenant un convoyeur, appelé "aérocanalisation", qui comprend un canal inférieur destiné à la circulation d'un gaz et un canal supérieur destiné à la circulation du matériau pulvérulent et dudit gaz, ledit canal inférieur et ledit canal supérieur étant séparés par une paroi poreuse pouvant être traversée par ledit gaz, le canal inférieur étant relié à une tubulure d'alimentation en gaz capable d'alimenter ledit canal inférieur en gaz sous une pression telle qu'elle permet la fluidisation potentielle dudit matériau pulvérulent dans ledit canal supérieur, pression qui sera appelée par la suite "pression de fluidisation potentielle" ou, plus simplement, "pression de fluidisation", le canal supérieur étant muni dans sa partie supérieure de parois transversales formant obstacle à la circulation dudit gaz et dudit matériau pulvérulent, lesdites parois étant disposées de telle sorte qu'elles forment avec la paroi supérieure dudit canal supérieur au moins un espace dans lequel une bulle de gaz sous pression se forme, résultant de la mise sous pression de fluidisation potentielle de ladite aérocanalisation, la pression régnant dans ladite bulle étant appelée "pression de bulle", ledit dispositif étant caractérisé en ce que, au niveau d'au moins une bulle, et de préférence au niveau de chaque bulle, la paroi du canal supérieur est munie d'un moyen d'évacuation du gaz de fluidisation reliant ladite bulle à un milieu extérieur, typiquement l'air ambiant ou un dispositif destiné au traitement des gaz captés au-dessus des cellules d'électrolyse (centre de traitement des gaz ou « CTG »), et comprenant un moyen créateur de dépression, qui crée une dépression, ou perte de charge, sensiblement constante. Cette perte de charge est définie à une valeur telle que, si le gaz est évacué dans un milieu extérieur où la pression est sensiblement constante (l'air ambiant à pression atmosphérique par exemple), ladite pression de bulle est elle-même maintenue à une valeur sensiblement constante, comprise entre la pression de fluidisation et la pression dudit milieu extérieur.

La demanderesse avait engagé des essais de laboratoire pour tester les limites de fonctionnement du système décrit dans EP 1 086 035. En particulier, certains essais avaient été effectués pour mieux cerner les phénomènes qui se produisent dans la colonne d'équilibrage. L'aérocanalisation, représentée par une colonne de fluidisation surmontée d'une colonne d'équilibrage présentait une de ses parois latérales transparente, ce qui permettait de voir le comportement du matériau pulvérulent dans le canal supérieur et dans la colonne d'équilibrage. On a pu ainsi constater que le régime turbulent dans la colonne d'équilibrage rendait particulièrement fluctuant le niveau supérieur du matériau pulvérulent présent dans la colonne d'équilibrage et que cela perturbait le lit dans l'aérocanalisation, au voisinage de ladite colonne d'équilibrage. On avait par ailleurs placé une vanne de fuite sur la paroi supérieure du canal supérieur pour faire varier la pression régnant dans la bulle dans une plage de valeurs aussi large que possible, sans avoir à modifier la marche du ventilateur qui alimente le canal inférieur en gaz de fluidisation. Lors de ces essais, la demanderesse a constaté avec surprise que l'ouverture de la vanne de fuite permettait de stabiliser le niveau supérieur du matériau pulvérulent présent dans la colonne, en ce sens que l'amplitude de variation d'altitude du niveau supérieur de la colonne avait très sensiblement diminué. Dans d'autres essais, ultérieurs, destinés à simuler une aérocanalisation munie de barrages séparant plusieurs bulles, la demanderesse a repris cette idée d'équiper la partie supérieure du canal supérieur d'une vanne de fuite: elle a constaté avec surprise que l'on évitait également l'apparition d'ondulations de grande amplitude à la surface du lit en fluidisation potentielle dans le canal supérieur.

Ainsi, en équipant, au niveau de chaque bulle, la partie supérieure du canal supérieur d'une aérocanalisation avec une vanne de fuite, la demanderesse s'est rendu compte que la perte de charge occasionnée par cette vanne permettait de stabiliser de manière particulièrement efficace la pression de bulle, le niveau du matériau pulvérulent dans la colonne d'équilibrage et, de manière plus générale, l'écoulement du matériau pulvérulent. Forte de ce constat, la demanderesse s'est posé la question de savoir si l'utilisation d'une telle vanne de fuite ne pouvait pas permettre de diminuer le nombre des colonnes d'équilibrage, voire de les supprimer complètement, au cas où ces dernières pouvaient remplir complètement le rôle jusque-là dévolu aux colonnes d'équilibrage, c'est-à-dire équilibrer la pression $p_f$ du gaz de fluidisation potentielle.

Dans des derniers essais, la demanderesse a pu confirmer son intuition: il est possible de faire fonctionner une aérocanalisation dépourvue de colonnes d'équilibrage pour transporter, par fluidisation potentielle, un matériau pulvérulent en phase hyperdense: il suffit de remplacer ladite colonne d'équilibrage par une vanne de fuite, ou plus largement par tout moyen qui crée une dépression sensiblement constante dont la valeur prédéterminée permet, à pression de fluidisation $p_f$ dans le canal inférieur et à pression extérieure $p_a$ sensiblement constantes, de maintenir la pression de bulle $p_b$ à une valeur stable dans un domaine de valeurs optimal pour l'écoulement du matériau pulvérulent, compris entre $p_a$ et $p_f$.

En d'autres termes, le dispositif selon l'invention comprend, au niveau d'au moins une bulle - et de préférence au niveau de chaque bulle -, un moyen créateur de dépression, qu'il soit muni ou non d'une colonne d'équilibrage. Dans le premier cas, ledit moyen créateur de dépression joue essentiellement un rôle stabilisateur du niveau de la suspension (matériau pulvérulent + gaz) qui se trouve dans la colonne d'équilibrage et qui équilibre la pression de fluidisation. Dans le second cas, il remplit également le rôle qui était dévolu à la colonne d'équilibrage. En outre, en l'absence de colonne d'équilibrage, il permet, à source de pression identique, d'atteindre une pression de bulle plus élevée et d'augmenter ainsi, pour une même consommation d'énergie, la capacité de transport du convoyeur. Bien évidemment, la pression de bulle est plus élevée mais ne peut pas atteindre le niveau de la pression de fluidisation puisque le gaz subit d'une part une perte de charge en traversant la paroi poreuse et d'autre part une perte de charge en s'écoulant à travers les particules dans le lit fluidisé.

Le premier cas (présence de colonnes d'équilibrage) correspond au perfectionnement de systèmes industriels existants, ou à la mise à disposition de convoyeurs ayant un nombre de colonnes d'équilibrage fortement limité par rapport à la pratique actuelle, par exemple des convoyeurs caractérisés par le fait qu'ils soient munis d'une colonne d'équilibrage tous les 20 mètres au lieu d'une colonne d'équilibrage tous les 6 mètres. Le second cas correspond à la mise à disposition de nouveaux convoyeurs caractérisés par une absence totale de colonnes d'équilibrage.

Le dispositif selon l'invention présente l'avantage de permettre le contrôle du niveau de la pression de bulle et de celui de la vitesse de sortie du gaz de fluidisation. Dans la colonne d'équilibrage, c'est la suspension matériau pulvérulent / gaz qui fait office de manomètre: par sa densité et son volume (représenté par la hauteur de colonne), elle équilibre la pression régnant dans le canal supérieur. L'effet manométrique du matériau dans la colonne d'équilibrage a été un atout majeur qui explique le succès de ce type de dispositif mais il présente l'inconvénient de rendre la pression de bulle essentiellement dépendante de la pression de fluidisation, de sorte que l'on ne peut faire varier la pression de bulle qu'en faisant varier la pression de fluidisation. En supprimant la colonne d'équilibrage et en la remplaçant par un moyen qui crée une dépression contrôlée, réglée à une valeur prédéterminée, on peut agir plus directement sur la pression de bulle, sans avoir à modifier la pression de fluidisation, de sorte que les conditions d'utilisation du convoyeur sont beaucoup plus souples.

Avantageusement, en particulier pour éviter une pollution du dit milieu extérieur par les fines particules de matériau pulvérulent entraînées par le gaz de fluidisation qui est évacué, ledit moyen d'évacuation du gaz de fluidisation est muni également d'au moins un dispositif de séparation solides/gaz. Bien évidemment, ce dispositif de séparation solides/gaz crée lui-même une perte de charge dont il faut tenir compte pour dimensionner de façon appropriée ledit moyen créateur de dépression.

Par moyen créateur de dépression, on peut entendre:

a) un simple orifice, ou "diaphragme", adjacent à l'enveloppe du volume occupé par la bulle, ménagé par exemple dans la paroi supérieure du canal supérieur, dont le diamètre correspond à la perte de charge qui convient à la pression de bulle recherchée; ledit orifice peut être l'orifice d'entrée d'une tubulure d'évacuation conduisant ledit gaz vers ledit milieu extérieur ;

b) une vanne de fuite, présentant un orifice à diamètre variable, permettant ainsi de faire varier la perte de charge subie par le gaz lors de son évacuation, donc de faire varier la pression de bulle;

c) un venturi;

d) au moins un dispositif séparateur solides/gaz, souvent nécessaire dans ce domaine d'application, par exemple un dispositif de type cyclone, où le gaz chargé de particules solides est introduit par jet latéral à l'intérieur dudit dispositif, contre une paroi sensiblement cylindrique: les particules solides, chassées par centrifugation mais arrêtées par ladite paroi cylindrique, perdent leur énergie cinétique, tombent par gravité et sont recueillies à la base de ladite paroi cylindrique pour être évacuées par la partie basse dudit dispositif.

Dans un mode préféré de l'invention, on choisit un moyen créateur de dépression comprenant au moins un dispositif de séparation solides/gaz placé dans la partie supérieure du canal supérieur, de sorte que les particules solides retenues par ledit dispositif puissent être évacuées directement dans la suspension. A cet effet, le conduit d'évacuation des particules solides retenues par ledit dispositif a une longueur définie de telle sorte que son extrémité basse plonge dans ladite dite suspension lorsqu'elle est en état de fluidisation potentielle. Habituellement, un cyclone standard présente, en partie haute, une paroi cylindrique dont la face interne est destinée à recevoir le jet latéral de suspension, une paroi conique convergeant vers le bas, qui relie l'extrémité basse de ladite paroi cylindrique à un conduit d'évacuation cylindrique, dont l'extrémité basse présente un orifice par lequel les particules solides sont évacuées. Si on utilise un cyclone standard, on dispose ce dernier dans le canal supérieur de l'aérocanalisation de telle sorte que l'extrémité basse du conduit cylindrique plonge dans la suspension en état de fluidisation potentielle. Dans le cadre de la présente invention, on préfère utiliser un dispositif type cyclone plus simple, en ce sens qu'il ne possède pas de paroi conique convergente : paroi cylindrique et conduit d'évacuation sont une seule et même paroi cylindrique dont l'extrémité basse plonge dans la suspension en état de fluidisation potentielle.

Avantageusement, pour répondre aux exigences environnementales de plus en plus contraignantes, au moins deux dispositifs de type cyclone sont montés en série sur le circuit d'évacuation du gaz de fluidisation, ce qui permet de dépoussiérer parfaitement ledit gaz, en ce sens qu'en sortie, il ne comprend pratiquement plus de particules solides de taille supérieure à 3 micromètres. Le ou les dispositifs de type cyclone peuvent être des cyclones standard, qui possèdent une paroi conique convergente à la base dudit conduit cylindrique mais, de préférence, on choisira des cyclones spécifiques qui présentent une paroi cylindrique dont la partie basse plonge directement dans la suspension.

Grâce au dispositif selon l'invention, on diminue sensiblement les pertes dues aux envolements. En effet, le régime turbulent régnant dans les colonnes d'équilibrage de l'art antérieur est tel qu'un grand nombre de particules sont entraînées par envolement. La demanderesse a constaté que le fait de stabiliser le niveau supérieur du matériau pulvérulent présent dans la colonne d'équilibrage (si elle existe encore), ainsi que le fait de stabiliser le niveau supérieur du lit en fluidisation potentielle dans le canal supérieur, permettaient de supprimer de façon quasi complète l'envolement de particules, dont la taille est typiquement supérieure à 5 micromètres, dans les conditions habituelles d'utilisation du dispositif. Cependant, même si cela présente un avantage certain, il ne semble pas possible, avec un seul moyen créateur de dépression, de supprimer l'envolement de fines micrométriques et nanométriques et il s'avère souvent nécessaire d'associer ledit moyen créateur de dépression avec des moyens supplémentaires de séparation solides/gaz.

L'invention présente également l'avantage, dans le cas où l'on supprime les colonnes d'équilibrage ou dans le cas où on en réduit le nombre, d'une part de simplifier la conception et la réalisation des aérocanalisations, d'autre part de diminuer la consommation d'énergie, car on peut utiliser de façon beaucoup plus efficace la pression de fluidisation en imposant dans chaque bulle une pression de bulle beaucoup plus proche de ladite pression de fluidisation.

Ledit moyen créateur de dépression comprend au moins un orifice de section prédéterminée, dont la valeur permet de créer la perte de charge recherchée. Si cet orifice est la seule issue de sortie du gaz de fluidisation, il est avantageux de viser un diamètre d'orifice permettant un débit de fuite au moins égal à $S.u_f$, où S est la surface de la partie de la paroi poreuse correspondant à la bulle concernée, et où $u_f$ est la vitesse de fluidisation. Typiquement, pour un matériau tel que l'alumine métallurgique, la vitesse de fluidisation est comprise entre 5 et 15 mm.s$^{-1}$. Ainsi, pour une partie d'aérocanalisation correspondant à une bulle donnée, que nous appellerons par la suite « caisson », la section de la paroi poreuse est connue, le débit de sortie du gaz, qui correspond au débit $S.u_f$, peut en être déduit et le diamètre de l'orifice peut être ainsi défini, puisque, à un diamètre d'orifice donné, les lois classiques de l'hydraulique permettent de connaître la relation entre la perte de charge et le débit de fuite.

La perte de charge au travers d'un orifice est sensiblement proportionnelle au carré du débit massique de fuite du gaz traversant ledit orifice et suit une loi du type :

$$\Delta P = \frac{1}{2\rho}\left[\frac{F_g(1-\beta^4)^{0,5}}{K\,A_t}\right]^2 \qquad \text{avec}: \qquad \beta = \frac{d_{or}}{d_t} \qquad At = \frac{\pi}{4}d_t^2$$

etoù :

- $\Delta P$ est la perte de charge au travers de l'orifice (exprimée en bar ; 1 bar = 0,1 MPa)
- $d_{or}$ est le diamètre de l'orifice
- $d_t$ est le diamètre du tube qui relie la paroi supérieure du canal supérieur au diaphragme présentant ledit orifice
- $\rho$ est la masse volumique de l'air de fluidisation (exprimée en kg/m$^3$)
- $F_g$ est le débit massique d'air de fluidisation (kg/h) (« débit de fuite »)
- $K$ est une constante de perte de charge

Prenons, à titre d'exemple, une aérocanalisation munie d'une paroi poreuse large de 14 cm. Si, au niveau d'un caisson, on vise une pression de bulle de 0,05 bar (5 000 Pa) (exprimée ici en terme de surpression par rapport à la pression atmosphérique), et une vitesse du gaz de fluidisation de 15 mm/s, le diamètre de l'orifice faisant communiquer la partie supérieure du canal supérieur avec l'air ambiant doit être de 25 mm si le caisson est long de 12 m, de 34 mm si le caisson est long de 24 m, et de 46 mm si le caisson est long de 72 m.

Si, par contre, la portion d'aérocanalisation comprend également une colonne d'équilibrage, le diamètre de l'orifice est choisi plus petit, de telle sorte que l'on puisse contrôler le niveau de la suspension solide/gaz dans la colonne d'équilibrage tout en assurant une fluidisation à faible vitesse de gaz. En reprenant l'exemple du paragraphe précédent, un caisson actuel, qui est muni d'une colonne d'équilibrage et a une longueur typique de 6 mètres environ, devrait être muni d'un orifice de diamètre de 20 mm environ si la colonne d'équilibrage était supprimée. Toutefois, si l'on désire conserver ladite colonne d'équilibrage et si l'on veut simplement utiliser ce nouveau moyen créateur de dépression dans le but de stabiliser le niveau supérieur de la suspension (gaz + matériau pulvérulent) dans la colonne d'équilibrage, on crée un orifice avec un diamètre nettement plus petit que 20 mm, la hauteur de remplissage de ladite suspension dans la colonne d'équilibrage permettant d'équilibrer la pression régnant dans le canal supérieur diminuée de la perte de charge due au dit orifice.

Avantageusement, le moyen créateur de dépression, qui assure une pression de bulle sensiblement constante en créant une perte de charge constante par rapport à la pression extérieure, est conçu de telle sorte que ladite perte de charge est importante, de façon à ne pas imposer une altitude trop importante au niveau supérieur du matériau pulvérulent dans la colonne d'équilibrage. En faisant en sorte que la hauteur de la colonne de suspension solide/gaz dans la colonne d'équilibrage ne dépasse pas une certaine valeur, typiquement de l'ordre de 1 m, on limite l'encombrement, le poids et le coût des dites colonnes d'équilibrage, tout en améliorant la fiabilité du système de convoyage.

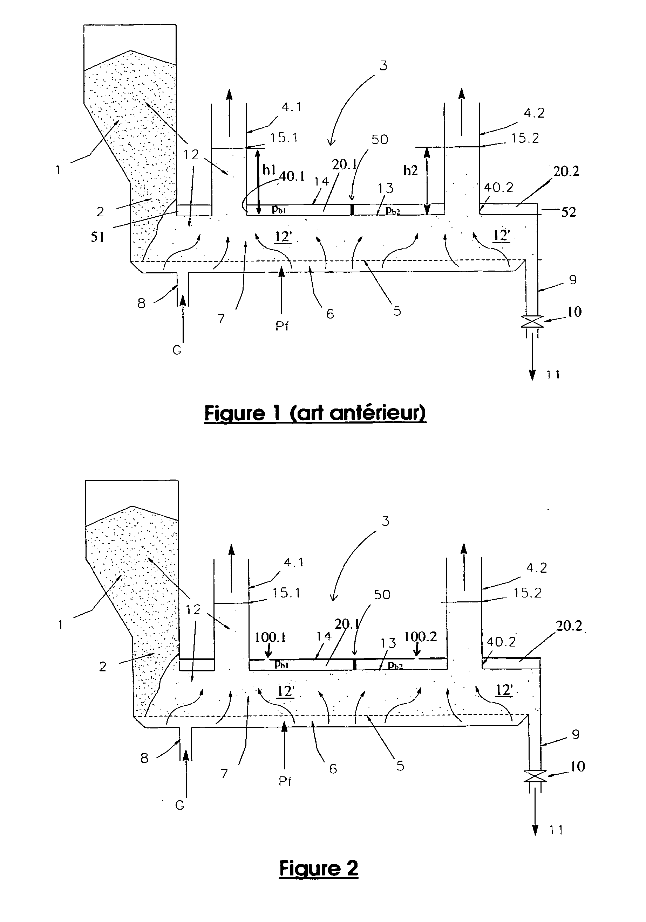

Ledit orifice peut avantageusement présenter, tel l'orifice d'une vanne, une section variable, ce qui permet de faire varier la pression de bulle - et ainsi d'assouplir les conditions de fonctionnement local de l'aérocanalisation - ou encore d'adapter un dispositif de géométrie donnée pour le convoyage de différents matériaux pulvérulents. On peut voir à ce sujet dans WO2009/010667 le domaine des matériaux pulvérulents susceptibles d'être concernés par le convoyage en lit hyperdense: représentés sur le diagramme de Geldart illustré en figure 1, où ils sont caractérisés par leur taille granulométrique moyenne et leur masse volumique (plus précisément la différence entre celle-ci et la masse volumique du gaz de fluidisation), ils se situent de préférence dans la zone hachurée de la figure 1 de ce document.

La figure 1 est une vue schématique en coupe verticale d'un dispositif de l'art antérieur muni d'une colonne d'équilibrage, tel qu'illustré dans EP 1 086 035. La figure 2 illustre une première modalité de l'invention appliquée à ce dispositif.

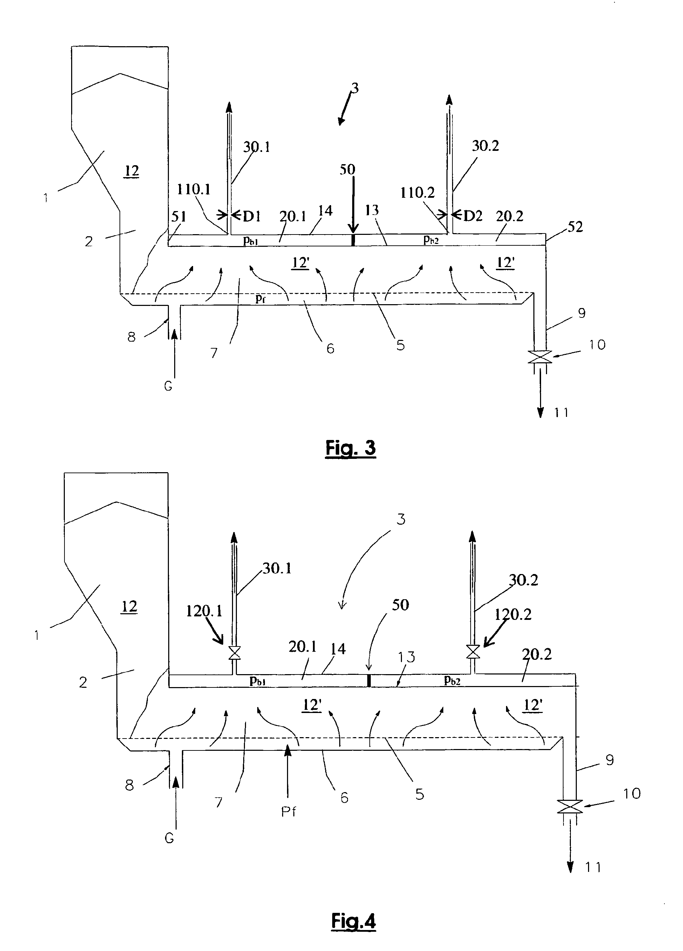

La figure 3 est une vue schématique en coupe verticale d'un dispositif selon une modalité de l'invention, non muni d'une colonne d'équilibrage. La figure 4 est une vue schématique, en coupe verticale, d'un dispositif semblable au précédent, différant de celui-ci en ce que, au niveau de chaque bulle, la paroi supérieure du canal supérieur est munie d'une vanne de fuite.

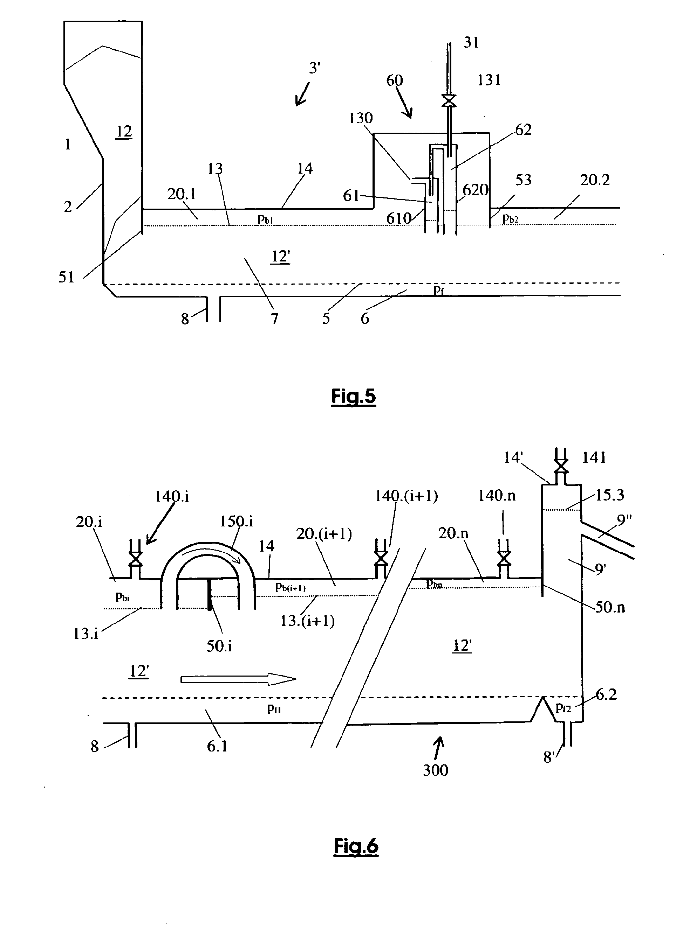

La figure 5 est une vue schématique, en coupe verticale, de la portion d'un autre dispositif selon l'invention, adapté aussi bien à l'alimentation en continu du matériau pulvérulent à partir d'une capacité de stockage qu'au convoyage d'un matériau pulvérulent sur une longue distance.

La figure 6 est une vue schématique en coupe verticale d'une portion intermédiaire et de la portion d'extrémité d'un quatrième dispositif selon l'invention. La portion intermédiaire illustrée correspond à la frontière entre deux bulles adjacentes, indicées i et i+1. L'alimentation, non illustrée, peut être imaginée à partir des figures précédentes, le sens d'écoulement du matériau étant toujours, par convention, de la gauche vers la droite.

## EXEMPLES DE REALISATION

### EXEMPLE 1: Aménagement d'un dispositif de l'art antérieur (Figures 1 et 2)

Le dispositif de la figure 1, a été décrit dans EP 1 086 035. Il se compose d'un réservoir de stockage aérien **1** du matériau à transporter, relié par une canalisation **2** à un convoyeur **3** du type aérocanalisation, d'un moyen d'évacuation **9** du convoyeur, qui, à l'aide d'un système de dosage contrôlé **10**, entraîne le matériau pulvérulent vers la zone à alimenter **11**.

Le réservoir de stockage aérien **1** contient le matériau pulvérulent **12** en vrac, soumis à la pression atmosphérique. Ce réservoir est en charge sur l'une des extrémités du convoyeur horizontal (ou incliné) **3** par l'intermédiaire de la canalisation **2**. Le convoyeur **3** se compose d'une paroi poreuse **5** séparant un canal inférieur **6** et un canal supérieur 7 destiné à la circulation du matériau pulvérulent.

Un gaz de fluidisation **G** est introduit par une canalisation **8** dans le canal inférieur **6,** où il est soumis à la pression de fluidisation $p_f$. Ce gaz passe au travers de la paroi poreuse **5** puis au travers du matériau pulvérulent **12** qui remplit le canal supérieur **7** du convoyeur, formant ainsi avec ce dernier un lit en fluidisation potentielle **12'**, c'est-à-dire une suspension de particules solides pulvérulentes dans une phase gazeuse. Ce lit en fluidisation potentielle **12'** est en phase hyperdense, la suspension présentant, dans le cas de l'alumine destinée aux cuves d'électrolyse, une masse volumique de l'ordre de 900 kg par $m^3$. Le gaz est évacué à faible débit en traversant le matériau pulvérulent qui remplit partiellement la colonne d'équilibrage (**4.1, 4.2**) jusqu'à un niveau supérieur (**15.1, 15.2**) sensiblement horizontal, la hauteur manométrique (**h1, h2**) équilibrant, au niveau de chaque bulle (**20.1, 20.2**), la pression de gaz $p_f$ Au-dessus du niveau supérieur **13** du lit en fluidisation potentielle **12'** se forme une bulle de gaz sous pression (**20.1, 20.2**) confinée dans un espace formé par la paroi supérieure **14** du canal supérieur **7** et des barrages. Pour la bulle **20.1**, ces barrages sont formés par le fer plat **50**, la pénétration **51** du réservoir de stockage et la pénétration **40.1** de la colonne d'équilibrage 4.1. Pour la bulle **20.2,** ces barrages sont formés par le fer plat **50**, la pénétration **40.2** de la colonne d'équilibrage **4.2** et la partie supérieure de la paroi latérale terminale **52** de l'aérocanalisation. Au sein des bulles **20.1** et **20.2** règnent respectivement, sous l'effet de la mise sous pression de fluidisation $p_f$ du canal inférieur **6**, les pressions de bulle $p_{b1}$ et $p_{b2}$. Avec le dispositif selon l'art antérieur, ces pressions de bulle ne peuvent être modifiées qu'en faisant varier la pression de fluidisation $p_f$.

Comme le montre la figure 2, le dispositif précédent a été aménagé, en ce sens qu'on a réalisé, conformément à la présente invention, au niveau de chacune des bulles (**20.1, 20.2**), un orifice (**100.1, 100.2**) dans la paroi supérieure **14** du canal supérieur **7,** en vue de permettre au gaz de fluidisation de s'échapper vers un milieu extérieur où règne une pression sensiblement constante, le passage du gaz de fluidisation à travers cet orifice s'effectuant avec une perte de charge bien définie, fonction du diamètre dudit orifice. Le premier effet de cet orifice est de stabiliser la position des niveaux supérieurs **15.1** et **15.2**, c'est-à-dire les hauteurs h1 et h2 des volumes de matériau pulvérulent occupant les colonnes d'équilibrage **4.1** et **4.2**, de sorte que l'on diminue sensiblement les pertes par envolement sans avoir besoin de donner une forme particulière aux extrémités supérieures desdites colonnes d'équilibrage. A titre indicatif, sur le dispositif expérimental, certes légèrement différent du dispositif illustré en figure 2 en ce sens qu'il ne possédait qu'une seule bulle à laquelle était associée une vanne de fuite, les amplitudes de variation d'altitude du niveau supérieur de la colonne de matériau pulvérulent ont diminué de plusieurs centaines de millimètres à quelques millimètres. Dans le dispositif expérimental, le canal supérieur était haut de 40 cm. Il était muni dans sa partie supérieure d'un barrage permettant la création d'une bulle sous pression haute de quelques centimètres. Le ventilateur utilisé permettait de faire varier la pression de fluidisation entre 90 et 200 mbar (pression relative: il s'agit de la surpression par rapport à la pression atmosphérique). En fonction de l'ouverture de la vanne de fuite, la pression de bulle variait entre 15 et 100 mbar, la hauteur de la colonne de suspension solide/gaz dans la colonne d'équilibrage variait entre 20 et 100 cm, la valeur de cette hauteur restant pratiquement stable lorsque l'ouverture de la vanne était bloquée à un diamètre donné et le ventilateur maintenu à un régime donné.

Le fait de stabiliser le niveau supérieur de la colonne d'équilibrage permet de supprimer de façon quasi complète l'envolement de particules, dont la taille est typiquement supérieure à 5 micromètres, dans les conditions habituelles d'utilisation du dispositif.

Dans une variante de l'aménagement selon l'invention d'un dispositif muni de colonnes d'équilibrage, les orifices ménagés dans la paroi supérieure du canal supérieur ont un diamètre variable (on munit le ciel de chaque bulle avec une vanne de fuite par exemple). De la sorte, on peut modifier séparément la pression de bulle dans chaque bulle, en agissant directement sur la vanne de fuite associée à la bulle concernée, sans avoir à modifier la pression de fluidisation.

## EXEMPLE 2 (Figures 3 et 4)

L'exemple 2 illustre un dispositif selon l'invention caractérisé en qu'il est exempt de colonnes d'équilibrage. Les pressions de bulle $p_{b1}$ et $p_{b2}$ sont maintenues sensiblement constantes à des valeurs prédéterminées, grâce aux pertes de charge créée par les orifices **110.1** et **110.2**, de diamètres respectifs D1 et D2, ménagés dans la paroi supérieure **14** du canal supérieur **7**. Les orifices **110.1** et **110.2** sont les entrées de tubulures **30.1** et **30.2** de diamètres au moins égaux à respectivement D1 et D2, qui permettent l'évacuation du gaz de fluidisation. Lesdites tubulures d'évacuation débouchent dans l'atmosphère ou, de préférence, en particulier lorsqu'il s'agit d'un dispositif d'alimentation continue en alumine pour les cellules d'électrolyse, vers des centres de traitement des gaz.

Grâce à ce dispositif, on diminue sensiblement les pertes dues aux envolements. Pour purifier le gaz de particules encore plus fines, typiquement submicroniques, voire nanométriques, les tubulures d'évacuation **30.1** et **30.2** du gaz de fluidisation sont avantageusement munies d'un dispositif de dépoussiérage, par exemple un cyclone (non illustré sur la figure 3). Dans ce cas, l'orifice d'entrée de la tubulure **30.1** (respectivement **30.2**) doit avoir une section prédéterminée différente de celle qu'il aurait s'il n'y avait pas de dispositif de dépoussiérage, car il faut que la somme des pertes de charge soit équivalente à la dépression fournie par l'orifice seul.

La figure 4 illustre une variante du précédent dispositif exempt de colonnes d'équilibrage, dans laquelle les orifices ont été remplacés par des vannes de fuite **120.1** et **120.2** reliant le ciel de chaque bulle **20.1** et **20.2** à une tubulure de sortie du gaz de fluidisation (**30.1** et **30.2**). L'ouverture de la vanne est variable, de sorte qu'en faisant varier le diamètre de l'orifice, on peut, au niveau de chaque bulle, faire varier la pression de bulle. Un premier avantage d'un tel dispositif est de pouvoir contrôler et agir localement sur l'écoulement du matériau dans le convoyeur. Un autre avantage est de pouvoir proposer un dispositif de géométrie donnée qui soit apte à être utilisé pour le convoyage de matériaux différents.

## EXEMPLE 3 (Figure 5)

La figure 5 illustre un autre mode de réalisation selon l'invention, plus particulièrement destiné au convoyage de matériau pulvérulent sur une longue distance, dans des conditions où le gaz de fluidisation ne peut pas être évacué vers un centre de traitement des gaz. Le moyen d'évacuation du gaz de fluidisation comprend ici une chambre **60** qui est ménagée dans le ciel du canal supérieur **7**, à l'intérieur de laquelle se trouve au moins un dispositif de séparation gaz/solides. Dans le mode de réalisation illustrant le présent exemple, deux dispositifs de séparation gaz/solides **61** et **62**, ici de type cyclone, sont montés en série de façon à satisfaire aux contraintes environnementales de plus en plus exigeantes: le gaz dépoussiéré ne contient plus qu'une infime proportion de fines micrométriques. Chacun de ces dispositifs comprend une paroi sensiblement cylindrique **610** et **620** dont la partie basse plonge dans le lit en fluidisation potentielle et une tubulure d'entrée, ménagée de telle sorte que la suspension gaz/solide arrive tangentiellement vers ladite paroi cylindrique. L'entrée tangentielle provoque un écoulement du flux gaz/solide le long de la paroi et vers le bas du cyclone. La force centrifuge ainsi générée sépare les particules du gaz. Les particules solides arrivent au contact de la paroi cylindrique, perdent une partie de leur énergie cinétique et sont entraînées par gravité vers le lit en fluidisation potentielle. La hauteur de cette paroi cylindrique est définie de telle sorte que le solide provenant directement du lit en fluidisation potentielle ne vienne pas engorger ledit cyclone.

La tubulure d'entrée du premier cyclone présente un orifice d'entrée **130**, dont le diamètre est calculé de telle sorte que la vitesse d'entrée du flux à dépoussiérer ait une vitesse comprise entre 2 et 40 m/s, de préférence entre 15 et 40 m/s, afin d'avoir la meilleure efficacité de séparation possible. Chaque cyclone doit être dimensionné de telle sorte que le diamètre d'entrée, adapté au bon fonctionnement dudit cyclone, contribue à la perte de charge totale visée pour atteindre la valeur prédéterminée, définie dans le cadre de la présente invention. La tubulure **31** de sortie dudit dispositif type cyclone, qui permet d'évacuer le gaz de fluidisation, est munie d'une vanne de fuite **131** dont l'ouverture variable permet de contrôler la pression de bulle $p_{b1}$.

## EXEMPLE 4 (Figure 6)

Le dispositif de cet exemple, illustré en figure 6, est comme le dispositif de l'exemple précédent, destiné au convoyage de matériau pulvérulent sur de longues distances. Il présente deux particularités avantageuses indépendantes.

La première de ces particularités est constituée par la configuration du caisson d'extrémité **300**: au lieu de présenter, comme dans les premiers exemples, un moyen d'évacuation 9, relié au bas du canal supérieur, sensiblement vertical et orienté vers le bas, il est muni d'une colonne d'extrémité **9'** sensiblement verticale, orientée vers le haut, dans laquelle le matériau peut monter sous l'effet de la pression du gaz de fluidisation. Une dérivation **9''** permet de faire sortir le matériau pulvérulent en déverse. La dérivation **9''** est reliée à ladite colonne d'extrémité **9'**, à une altitude légèrement supérieure à celle de la paroi supérieure **14** du canal supérieur **7** et choisie de telle sorte que l'embranchement puisse se trouver sous le niveau supérieur **15.3** de la suspension matériau pulvérulent + gaz. Avantageusement, ladite colonne d'extrémité **9'** est surmontée d'une paroi supérieure **14'** munie d'un moyen créateur de dépression, tel qu'une vanne de fuite **141**, de telle sorte qu'une bulle sous pression puisse s'établir au-dessous ladite paroi supérieure, sous une pression de bulle donnée. Une telle configuration permet de stabiliser, en cet endroit, le niveau supérieur du lit en fluidisation potentielle **12'**, ce qui favorise un écoulement continu à débit constant du matériau à convoyer. Avantageusement, en cette partie extrême, une zone **6.2** du canal inférieur est alimentée séparément en gaz de fluidisation de façon à avoir une pression de fluidisation $p_{f2}$ différente, typiquement plus importante, de la pression $p_{f1}$ qui règne dans le reste, c'est-à-dire la quasi-totalité **6.1** du canal inférieur.

Une telle configuration, consistant à avoir une dérivation **9''** de sortie en déverse au-dessus du niveau supérieur **15.3** de la suspension matériau pulvérulent + gaz, est particulièrement bien adaptée à un écoulement effectué sans risque de ségrégation, utilisant un régime bouillonnant tel que celui préconisé dans la demande WO2009/010667. Pour des matériaux présentant un risque de ségrégation, tels que les matériaux pulvérulents polydisperses, il est préférable de prévoir, au niveau de ce caisson d'extrémité, une sortie légèrement au-dessus de la paroi poreuse (ou toile) **5**.

La deuxième de ces particularités est particulièrement intéressante car elle permet de convoyer le matériau pulvérulent sur une grande longueur, tout en lui faisant prendre progressivement de l'altitude. L'aérocanalisation présente un canal supérieur compartimenté de telle sorte qu'elle présente n bulles adjacentes sous des pressions respectives $p_{bi}$, i variant de 1 à n. La paroi supérieure **14** du canal supérieur est munie d'obstacles, de parois transversales telles que **50.i** et **50.n**. Chaque bulle **20.i** (i=1 à n) associée est munie d'un moyen créateur de dépression, ici une vanne de fuite **140.i**. Les bulles adjacentes **20.i** et **20.(i+1)** sont séparées par un barrage **50.i**. Une tubulure **150.i** en forme de U renversé, que nous appellerons par la suite "siphon" est placée sur la canalisation de telle sorte que les branches du U se trouvent de part et d'autre du dit barrage **50.i,** et ont une longueur suffisante pour que leurs extrémités débouchent dans la suspension en fluidisation potentielle. Les vannes de fuite **140.i** et **140.(i+1)** sont réglées de telle sorte que, de part et d'autre du barrage **50.i**, il règne une pression de bulle $p_{bi}$ supérieure à $p_{b(i+1)}$. En pratique, la vanne de fuite **140.i** amont est moins ouverte que la vanne de fuite **140.(i+1)** avale. De ce fait, le gaz de fluidisation ayant la possibilité de s'échapper avec un débit de fuite plus faible dans la portion amont que dans la portion avale, la pression de bulle $p_{b(i+1)}$ est plus faible que la pression de bulle $p_{bi}$ et il s'établit un courant de gaz dans le siphon (illustré par une simple flèche en figure 6) qui passe de la portion amont vers la portion avale pour être évacué par la vanne de fuite **140.(i+1)** avale. De façon surprenante, la demanderesse a constaté que ce courant de gaz dans ledit siphon s'effectuait sans entraînement de particules solides.

Sous l'effet de cette différence de pression de bulle, le niveau supérieur **13.i** du lit en fluidisation potentielle en amont du barrage **50.i** est à une altitude plus faible que le niveau supérieur **13.(i+1)** du lit en fluidisation potentielle en aval du barrage **50.i.** On voit qu'ainsi, le niveau supérieur du lit en fluidisation potentielle voit son altitude s'élever à chaque passage de barrage **50.i**.

Bien évidemment, la tubulure en U inversé ne peut pas avoir n'importe quelle section : il faut que le passage du gaz de fluidisation d'une bulle à une autre, qui s'effectue avec un débit massique correspondant à la différence entre les débits de fuite des moyens d'évacuation de ces bulles adjacentes, puisse s'effectuer à une vitesse proche ou inférieure à la vitesse de transport de l'alumine, de façon à limiter l'envol des particules. En fait, ce qui compte pour obtenir l'effet voulu (convoyer le matériau pulvérulent sur une grande longueur, tout en lui faisant prendre progressivement de l'altitude), c'est :

a) munir deux bulles adjacentes avec des moyens créateurs de dépression de telle sorte que la dépression en sortie de la bulle avale est supérieure à la dépression en sortie de la bulle amont et

b) ménager un passage entre les deux bulles adjacentes pour permettre de compenser la différence des débits de fuite des moyens d'évacuation desdites bulles adjacentes, ledit passage - typiquement une tubulure en forme de U renversé placée sur la canalisation de telle sorte que les branches du U se trouvent de part et d'autre du dit barrage **50.i**, et ont une longueur suffisante pour que leurs extrémités débouchent dans la suspension en fluidisation potentielle - présentant une section telle que le gaz de fluidisation traverse ce passage avec une vitesse proche ou inférieure à la vitesse de transport de l'alumine.

## Revendications

**1.** Dispositif permettant de transporter un matériau pulvérulent (12), entre une zone d'alimentation (1) et au moins une zone à alimenter, comprenant un convoyeur (3), appelé "aérocanalisation", qui comprend un canal inférieur (6), destiné à la circulation d'un gaz, et un canal supérieur (7), destiné à la circulation du matériau pulvérulent et dudit gaz, ledit canal inférieur et ledit canal supérieur étant séparés par une paroi poreuse (5) pouvant être traversée par ledit gaz, le canal inférieur étant relié à une tubulure (8) d'alimentation en gaz capable d'alimenter ledit canal inférieur en gaz sous une pression $p_f$ telle qu'elle permet la fluidisation potentielle dudit matériau pulvérulent dans ledit canal supérieur, pression qui est appelée "pression de fluidisation", ledit canal supérieur étant muni dans sa partie supérieure de parois transversales (50, 51, 52, 53; 50.i, 50.n) formant obstacle à la circulation dudit gaz et dudit matériau pulvérulent, lesdites parois transversales étant disposées de telle sorte qu'elles forment avec une paroi supérieure dudit canal supérieur au moins un espace, dans lequel une bulle de gaz sous pression (20.1, 20.2; 20.i, 20.(i+1), 20.n) se forme, sous une pression de bulle donnée, résultant de la mise sous pression de fluidisation potentielle de ladite aérocanalisation, ladite aérocanalisation étant constituée de caissons dont chacun correspond à une bulle donnée, ledit dispositif étant **caractérisé en ce que**, au niveau d'au moins une bulle, la paroi du canal supérieur est munie d'un moyen d'évacuation du gaz de fluidisation reliant ladite bulle à un milieu extérieur et comprenant un moyen créateur de dépression (100.1, 100.2; 110.1, 110.2; 120.1, 120.2; 130, 61, 62; 140.i, 140.(i+1), 140.n) qui crée une dépression sensiblement constante.

2. Dispositif selon la revendication 1, **caractérisé en ce que** le moyen créateur de dépression est conçu de façon à ce que ladite dépression sensiblement constante créée par ledit moyen est définie à une valeur telle que, si la pression dans ledit milieu extérieur est sensiblement constante, ladite pression de bulle est elle-même maintenue à une valeur sensiblement constante, comprise entre la pression de fluidisation $p_f$ et la pression dudit milieu extérieur.

3. Dispositif selon la revendication 1 ou 2 **caractérisé en ce qu'**au niveau de chaque bulle (20.1, 20.2, .., 20.i, 20.(i+1), ..., 20.n), la paroi du canal supérieur est munie d'un moyen d'évacuation du gaz de fluidisation reliant ledit canal supérieur audit milieu extérieur et comprenant un moyen créateur de dépression qui crée une dépression sensiblement constante.

4. Dispositif selon l'une quelconque des revendications 1 à 3, **caractérisé en ce qu'**il est exempt de colonne d'équilibrage (4.1, 4.2), c'est-à-dire de colonne dont l'extrémité supérieure est ouverte à un milieu extérieur et qui est remplie de matériau pulvérulent de telle sorte que, lors de la mise sous pression de fluidisation potentielle de ladite aérocanalisation, la suspension comprenant le gaz et le matériau pulvérulent qui remplit ladite colonne d'équilibrage présente une hauteur de remplissage qui permet d'équilibrer la pression régnant dans ledit canal supérieur.

5. Dispositif selon l'une quelconque des revendications 1 à 4, **caractérisé en ce que** ledit moyen d'évacuation comprend au moins un dispositif séparateur solides/gaz.

6. Dispositif selon l'une quelconque des revendications 1 à 4, **caractérisé en ce que** ledit moyen d'évacuation est ledit moyen créateur de dépression et se présente sous la forme d'un orifice (100.1, 100.2) adjacent à l'enveloppe du volume occupé par ladite bulle, dont le diamètre correspond à la perte de charge qui convient à la pression de bulle recherchée.

7. Dispositif selon l'une quelconque des revendications 1 à 5, **caractérisé en ce que** ledit moyen d'évacuation du gaz de fluidisation est une tubulure (30.1, 30.2) débouchant dans le canal supérieur au niveau de la bulle, typiquement dans la paroi supérieure du canal supérieur, ledit moyen créateur de dépression étant l'orifice d'entrée (110.1, 110.2) de ladite tubulure, dont le diamètre correspond à la perte de charge qui convient à la pression de bulle recherchée.

8. Dispositif selon la revendication 7, **caractérisé en ce que** ladite tubulure (30.1, 30.2) est munie d'une vanne de fuite (120.1, 120.2), présentant un orifice à diamètre variable, permettant ainsi de faire varier la perte de charge subie par le gaz lors de son évacuation.

9. Dispositif selon la revendication 5, **caractérisé en ce que** ledit moyen d'évacuation du gaz de fluidisation comprend une chambre (60) qui est ménagée dans la partie supérieure du canal supérieur (7) et à l'intérieur de laquelle se trouve ledit dispositif de séparation gaz/solides.

10. Dispositif selon la revendication 9, dans lequel ledit dispositif de séparation gaz/solides (61) est de type cyclone et comprend un conduit d'évacuation des particules solides retenues par ledit dispositif dont la longueur est définie de telle sorte que son extrémité basse plonge dans ladite dite suspension lorsqu'elle est en état de fluidisation potentielle.

11. Dispositif selon la revendication 9 ou 10, dans lequel ledit dispositif de séparation gaz/solides (61) comprend une tubulure d'entrée et une paroi sensiblement cylindrique (610), la tubulure d'entrée étant ménagée de telle sorte qu'un gaz chargé de particules solides arrive tangentiellement sur ladite paroi sensiblement cylindrique, ladite paroi sensiblement cylindrique ayant une hauteur définie de telle sorte que sa partie basse plonge dans la suspension (12') présente dans le canal supérieur lorsque celle-ci est en état de fluidisation potentielle.

12. Dispositif selon l'une quelconque des revendications 9 à 11, dans lequel ledit dispositif de séparation gaz/solides présente un orifice d'entrée (130) d'un gaz chargé de particules solides, dont le diamètre est calculé de telle sorte que la vitesse d'entrée dudit gaz à dépoussiérer ait une vitesse comprise entre 2 et 40 m/s, ledit dispositif étant dimensionné de telle sorte que le diamètre de l'orifice d'entrée, adapté au bon fonctionnement séparateur dudit dispositif, contribue à la perte de charge totale visée pour atteindre la pression de bulle recherchée.

13. Dispositif selon la revendication 12, dans lequel une tubulure (31) de sortie dudit dispositif de séparation gaz/solides est munie d'une vanne de fuite (131) dont l'ouverture variable permet de contrôler la pression de bulle $p_{b1}$.

14. Dispositif selon l'une quelconque des revendications 9 à 13, dans lequel ledit dispositif de séparation gaz/solides est composé de plusieurs dispositifs de type cyclone (61, 62) montés en série.

15. Dispositif selon l'une quelconque des revendications 1 à 14 **caractérisé en ce qu'**il comprend un caisson d'extrémité (300), muni d'une colonne d'extrémité (9') sensiblement verticale, orientée vers le haut, dans laquelle le matériau peut monter sous l'effet de la pression du gaz de fluidisation, une dérivation (9") permettant de faire sortir le matériau pulvérulent en déverse, ladite dérivation (9") étant reliée à ladite colonne d'extrémité (9'), à une altitude légèrement supérieure à celle de la paroi supérieure (14) du canal supérieur (7) et choisie de telle sorte que l'embranchement puisse se trouver sous le niveau supérieur (15.3) de la suspension comprenant le matériau pulvérulent et le gaz.

16. Dispositif selon la revendication 15, dans lequel ladite colonne d'extrémité (9') est surmontée d'une paroi supérieure (14') munie d'un moyen créateur de dépression de telle sorte qu'une bulle sous pression puisse s'établir au-dessous ladite paroi supérieure, sous une pression de bulle donnée.

17. Dispositif selon la revendication 15 ou 16, dans lequel, au niveau du dit caisson d'extrémité (300), une zone (6.2) du canal inférieur est alimentée séparément en gaz de fluidisation de façon à avoir une pression de fluidisation $p_{f2}$ différente de la pression $p_{f1}$ qui règne dans le reste (6.1) du canal inférieur.

18. Dispositif selon l'une quelconque des revendications 15 à 17 dans lequel le bas du canal supérieur du caisson d'extrémité (300) est également muni d'un moyen d'évacuation, situé légèrement au-dessus de la paroi poreuse (5).

19. Dispositif selon l'une quelconque des revendications 1 à 18 **caractérisé en ce que** ledit canal supérieur (7) est compartimenté de telle sorte qu'il présente n bulles adjacentes (20.1, ... 20.i, ... 20.n) sous des pressions respectives $p_{bi}$, i variant de 1 à n, la paroi supérieure (14) du canal supérieur (7) étant munie de barrages (50.i, 50.n) séparant lesdites bulles, chaque bulle (20.i, i=1 à n) associée étant munie d'un moyen créateur de dépression, tel qu'une vanne de fuite (140.i), et **en ce qu'**au moins deux compartiments du canal supérieur (7) correspondant à deux bulles adjacentes (20.i, 20.(i+1)) sont munis de moyens créateurs de dépression (140.i, 140.(i+1)) de telle sorte que la dépression en sortie de la bulle avale (20.i) est supérieure à la dépression en sortie de la bulle amont (20.(i+1)) et **en ce qu'**un passage est ménagé entre lesdites bulles adjacentes, qui permet de compenser la différence entre les débits de fuite des moyens d'évacuation desdites bulles adjacentes, ledit passage présentant une section telle que le gaz de fluidisation traverse ce passage avec une vitesse proche ou inférieure à la vitesse de fluidisation.

20. Dispositif selon la revendication 19 dans lequel ledit passage est une tubulure (150.i) en forme de U renversé placée sur la canalisation de telle sorte que les branches du U se trouvent de part et d'autre du dit barrage (50.i) qui sépare lesdites bulles adjacentes (20.i et 20.(i+1)), les dites branches du U ayant une longueur suffisante pour que leurs extrémités débouchent dans la suspension en fluidisation potentielle.

## Patentansprüche

1. Vorrichtung zum Transportieren eines pulverförmigen Materials (12) zwischen einer Speisezone (1) und mindestens einer zu speisenden Zone, umfassend eine Fördereinrichtung (3), die sogenannte "Luftleitung", welche einen unteren Kanal (6) für die Zirkulation eines Gases und einen oberen Kanal (7) für die Zirkulation des pulverförmigen Materials aufweist, wobei der untere Kanal und der obere Kanal durch eine poröse Wand (5), durch welche das Gas hindurchströmen kann, voneinander getrennt sind, wobei der untere Kanal mit einem Gaszufuhrrohr (8) verbunden ist, das den unteren Kanal mit Gas versorgt, und zwar unter einem solchen Druck $p_f$, dem sogenannten Fluidisierdruck, dass die potentielle Fluidisierung des pulverförmigen Materials im oberen Kanal ermöglicht wird, wobei der obere Kanal in seinem oberen Bereich mit Querwänden (50, 51, 52; 53; 50.i, 50.n) versehen ist, die die Zirkulation des Gases und des pulverförmigen Material behindern, welche Querwände so angeordnet sind, dass sie mit einer oberen Wand des oberen Kanals mindestens einen Raum bilden, in dem sich unter einem vorgegebenen Blasendruck eine unter Druck stehende Gasblase (20.1, 20.2; 20.i, 20.(i+1), 20.n) bildet, die aus der Druckbeaufschlagung der Luftleitung zur potentiellen Fluidisierung resultiert, welche Luftleitung aus Kästen besteht, die jeweils einer bestimmten Blase entsprechen, wobei die Vorrichtung **dadurch gekennzeichnet ist, dass** in Höhe mindestens einer Blase die Wand des oberen Kanals mit einem Mittel zur Ableitung des Fluidisiergases versehen ist, welches die Blase mit einer äußeren Umgebung verbindet und ein Mittel zur Erzeugung von Unterdruck (100.1, 100.2; 110.1, 110.2; 120.1, 120.2; 130, 61, 62; 140.i, 140.(i+1), 140.n) aufweist, welches einen im Wesentlichen konstanten Unterdruck erzeugt.

2. Vorrichtung nach Anspruch 1, **dadurch gekennzeichnet, dass** das Mittel zur Erzeugung von Unterdruck so ausgelegt ist, dass der damit erzeugte, im Wesentlichen konstante Unterdruck auf einen solchen Wert festgelegt ist, dass bei in der äußeren Umgebung im Wesentlichen konstantem Druck der Blasendruck selbst auf einem im Wesentlichen konstanten Wert gehalten wird, der zwischen dem Fluidisierdruck $p_f$ und dem Druck der äußeren Umgebung liegt.

3. Vorrichtung nach Anspruch 1 oder 2, **dadurch gekennzeichnet, dass** in Höhe jeder Blase (20.1, 20.2, ..., 20.i, 20.(i+1), ..., 20.n) die Wand des oberen Kanals mit einem Mittel zur Ableitung des Fluidisiergases versehen ist, welches den oberen Kanal mit der äußeren Umgebung verbindet und ein Mittel zur Erzeugung von Unterdruck aufweist, welches einen im Wesentlichen konstanten Unterdruck erzeugt.

4. Vorrichtung nach irgendeinem der Ansprüche 1 bis 3, **dadurch gekennzeichnet, dass** sie keine Ausgleichssäule (4.1, 4.2) besitzt, das heißt keine Säule, die an ihrem oberen Ende zu einer äußeren Umgebung hin offen ist und mit pulverförmigem Material gefüllt ist, so dass bei Druckbeaufschlagung der Luftleitung zur potentiellen Fluidisierung die das Gas und das pulverförmige Material enthaltende Suspension, mit der die Ausgleichssäule gefüllt ist, eine Füllhöhe aufweist, die den im oberen Kanal herrschenden Druck auszugleichen vermag.

5. Vorrichtung nach irgendeinem der Ansprüche 1 bis 4, **dadurch gekennzeichnet, dass** das Ableitungsmittel mindestens eine Feststoff/Gas-Abscheidevorrichtung umfasst.

6. Vorrichtung nach irgendeinem der Ansprüche 1 bis 4, **dadurch gekennzeichnet, dass** das Ableitungsmittel das genannte Mittel zur Erzeugung von Unterdruck ist und in Form einer an die Mantelfläche des von der Blase eingenommenen Volumens angrenzenden Öffnung (100.1, 100.2) vorliegt, deren Durchmesser auf den Druckverlust abgestimmt ist, der für den gewünschten Blasendruck notwendig ist.

7. Vorrichtung nach irgendeinem der Ansprüche 1 bis 5, **dadurch gekennzeichnet, dass** das Mittel zur Ableitung des Fluidisiergases ein Rohrstutzen (30.1, 30.2) ist, der in Höhe der Blase in den oberen Kanal, typischerweise in die obere Wand des oberen Kanals einmündet, wobei das Mittel zur Erzeugung von Unterdruck die Einlassöffnung (110.1, 110.2) des Rohrstutzens ist, deren Durchmesser auf den Druckverlust abgestimmt ist, der für den gewünschten Blasendruck notwendig ist.

8. Vorrichtung nach Anspruch 7, **dadurch gekennzeichnet, dass** der Rohrstutzen (30.1, 30.2) mit einem Leckageventil (120.1, 120.2) versehen ist, welches eine Öffnung mit veränderlichem Durchmesser aufweist, wodurch der Druckverlust, den das Gas bei seinem Ableiten erfährt, veränderbar ist.

9. Vorrichtung nach Anspruch 5, **dadurch gekennzeichnet, dass** das Mittel zur Ableitung des Fluidisiergases eine im oberen Teil des oberen Kanals (7) vorgesehene Kammer (60) umfasst, in welcher sich die Feststoff/Gas-Abscheidevorrichtung befindet.

10. Vorrichtung nach Anspruch 9, bei der die Feststoff/Gas-Abscheidevorrichtung (61) vom Typ Zyklon ist und eine Abführleitung für die von der Vorrichtung zurückgehaltenen Feststoffpartikel umfasst, deren Länge so festgelegt ist, dass ihr unteres Ende in die Suspension eintaucht, wenn diese sich im potentiell fluidisierten Zustand befindet.

11. Vorrichtung nach Anspruch 9 oder 10, bei der die Feststoff/Gas-Abscheidevorrrichtung (61) ein Einlaufrohr und eine im Wesentlichen zylindrische Wand (610) umfasst, wobei das Einlaufrohr so angeordnet ist, dass ein mit Feststoffpartikeln beladenes Gas tangential auf der im Wesentlichen zylindrischen Wand auftrifft, und wobei die Höhe der im Wesentlichen zylindrischen Wand so festgelegt ist, dass ihr unteres Ende in die im oberen Kanal vorhandene Suspension (12') eintaucht, wenn diese sich im potentiell fluidisierten Zustand befindet.

12. Vorrichtung nach irgendeinem der Ansprüche 9 bis 11, bei der die Feststoff/Gas-Abscheidevorrichtung eine Eintrittsöffnung (130) für ein mit Feststoffpartikeln beladenes Gas aufweist, deren Durchmesser so berechnet ist, dass die Eintrittsgeschwindigkeit des zu entstaubenden Gases in einem Geschwindigkeitsbereich zwischen 2 und 40 m/s liegt, wobei die Vorrichtung so dimensioniert ist, dass der für die ordnungsgemäße Durchführung der Abscheidung ausgelegte Durchmesser der Eintrittsöffnung zu dem angestrebten Gesamtdruckverlust zur Erzielung des gewünschten Blasendrucks beisteuert.

13. Vorrichtung nach Anspruch 12, bei der ein Austrittsrohr (31) der Feststoff/Gas-Abscheidevorrichtung mit einem Leckageventil (131) versehen, dessen variable Öffnung die Überwachung des Blasendrucks $p_{b1}$ ermöglicht.

14. Vorrichtung nach irgendeinem der Ansprüche 9 bis 13, bei der die Feststoff/Gas-Abscheidevorrichtung aus mehreren, in Reihe geschalteten Vorrichtungen vom Typ Zyklon (61, 62) besteht.

15. Vorrichtung nach irgendeinem der Ansprüche 1 bis 14, **dadurch gekennzeichnet, dass** sie einen Endkasten (300) mit einer im Wesentlichen vertikalen, nach oben gerichteten Endsäule (9') umfasst, in der das Material durch den Druck des Fluidisiergases aufsteigen kann, wobei eine Ableitung (9") es ermöglicht, das pulverförmige Material aus der Säule herauszutreiben, wobei die Ableitung (9") mit der Endsäule (9') verbunden ist, und zwar in einer Höhe, die geringfügig über der Höhe der oberen Wand (14) des oberen Kanals (7) liegt und so gewählt ist, dass sich die Abzweigung unter dem oberen Pegel (15.3) der Suspension aus pulverförmigem Material und Gas befinden kann.

16. Vorrichtung nach Anspruch 15, bei der über der Endsäule (9') eine obere Wand (14') mit einem Mittel zur Erzeugung von Unterdruck so angeordnet ist, dass sich bei einem vorgegebenen Blasendruck unterhalb der oberen Wand eine unter Druck stehende Blase ausbilden kann.

17. Vorrichtung nach Anspruch 15 oder 16, bei der ein Bereich (6.2) des unteren Kanals in Höhe des Endkastens (300) separat mit Fluidisiergas gespeist wird, um einen Fluidisierdruck $p_{f2}$ zu haben, der sich von dem im übrigen Bereich (6.1) des unteren Kanals herrschenden Druck unterscheidet.

18. Vorrichtung nach irgendeinem der Ansprüche 15 bis 17, bei dem der untere Teil des oberen Kanals des Endkastens (300) auch mit einem Ableitungsmittel versehen ist, welches sich etwas oberhalb der porösen Wand (5) befindet.

19. Vorrichtung nach irgendeinem der Ansprüche 1 bis 18, **dadurch gekennzeichnet, dass** der obere Kanal (7) so unterteilt ist, dass er n benachbarte Blasen (20.1, ... 20.i, ... 20.n) unter jeweiligen Drücken $p_{bi}$ aufweist, mit i von 1 bis n, wobei die obere Wand (14) des oberen Kanals (7) mit Sperren (50.i, 50.n) zum Separieren der Blasen versehen ist, wobei jede zugeordnete Blase (20.i, i = 1 bis n) ein Mittel zur Erzeugung von Unterdruck aufweist, wie zum Beispiel ein Leckageventil (140.i), und dass mindestens zwei Kammern des oberen Kanals (7), die zwei benachbarten Blasen (20.i, 20.(i+1)) entsprechen, mit Mitteln zur Erzeugung von Unterdruck (140.i, 140.(i+1)) versehen sind, so dass der Unterdruck am Austritt der stromabwärtigen Blase (20.i) höher ist als der Unterdruck am Austritt der stromaufwärtigen Blase (20.(i+1)), und dass zwischen benachbarten Blasen ein Durchlass vorgesehen ist, der es ermöglicht, die Differenz zwischen den Leckraten der Ableitungsmittel benachbarter Blasen auszugleichen, wobei der Durchlass einen solchen Querschnitt aufweist, dass das Fluidisiergas diesen Durchlass mit einer Geschwindigkeit durchströmt, die nahe bei oder unter der Fluidisiergeschwindigkeit liegt.

20. Vorrichtung nach Anspruch 19, bei der der Durchlass ein Rohr (150.i) in Form eines umgekehrten U ist, das auf der Rohrleitung so angeordnet ist, dass sich die Schenkel des U beiderseits der Sperre (50.i) befinden, die die benachbarten Blasen (20.i und 20.(i+1)) voneinander trennt, wobei die Schenkel des U lang genug sind, damit ihre Enden in die potentiell fluidisierende Suspension einmünden.

**Claims**

1. Device for transporting a powder (12), between a supply zone (1) and at least one zone to be supplied, including a conveyer (3), called an "air chute", which includes a lower channel (6), designed for the circulation of a gas, and an upper channel (7), designed for the circulation of powder and said gas, said lower channel and said upper channel being separated by a porous wall (5) that can be crossed by said gas, the lower channel being connected to a gas supply pipe (8) able to supply said lower channel with gas at a pressure $p_f$ such that it allows the potential fluidization of said powder in said upper channel; this pressure is called "fluidization pressure", said upper channel being provided in its upper part with transverse walls (50, 51, 52, 53; 50.i, 50.n) forming an obstacle to the circulation of said gas and said powder, said transverse walls being laid out so that they form with an upper wall of said channel at least one space, in which a gas bubble under pressure (20.1, 20.2; 20.i, 20. (i+1), 20.n) is formed, at a given bubble pressure, resulting from putting said air chute under potential fluidization pressure, said air chute consisting of boxes each of which corresponds to a given bubble, said device being **characterized in that**, at the level of at least one bubble, the wall of the upper channel is provided with a means of removal of the fluidization gas connecting said bubble to an external environment and including a means of creating pressure drop (100.1, 100.2; 110.1, 110.2; 120.1, 120.2; 130, 61, 62; 140.i, 140.(i+1), 140.n) which creates a substantially constant pressure drop.

2. Device according to claim 1, **characterized in that** the means of creating pressure drop is designed so that said substantially constant pressure drop created by said means is defined at a value such that, if the pressure in said external environment is substantially constant, said bubble pressure is itself kept at a substantially constant value, ranging between the fluidization pressure $p_f$ and the pressure of said external environment.

3. Device according to claim 1 or 2 **characterized in that** at the level of each bubble (20.1, 20.2, .., 20.i, 20.(i+1), ..., 20.n), the wall of the upper channel is provided with a means of removal of fluidization gas connecting said upper channel to said external environment and including a means of creating pressure drop which creates a substantially constant pressure drop.

4. Device according to any of claims 1 to 3, **characterized in that** it has no balancing column (4.1, 4.2), i.e. a column whose higher end is open to an external environment and which is filled with powder so that, when putting said air chute under potential fluidization pressure, the suspension comprising the gas and the powder which fills said balancing column has a filling height which makes it possible to balance the pressure prevailing in said upper channel.

5. Device according to any of claims 1 to 4, **characterized in that** said means of removal includes at least one solid/gas separator.

6. Device according to any of claims 1 to 4, **characterized in that** said means of removal is said means of creating pressure drop and takes the form of an opening (100.1, 100.2) adjacent to the envelope of the volume occupied by said bubble, whose diameter corresponds to the pressure drop which is appropriate for the desired bubble pressure.

7. Device according to any of claims 1 to 5, **characterized in that** said means of removal of the fluidization gas is a pipe (30.1, 30.2) emerging into the upper channel at the level of the bubble, typically in the upper wall of the upper channel, said means of creating pressure drop being the inlet opening (110.1, 110.2) of said pipe, whose diameter corresponds to the pressure drop which is appropriate for the desired bubble pressure.

8. Device according to claim 7, **characterized in that** said pipe (30.1, 30.2) is provided with an escape valve (120.1, 120.2), having an opening of variable diameter, making it possible to vary the pressure drop undergone by the gas while it is being removed.

9. Device according to claim 5, **characterized in that** said means of removal of the fluidization gas includes a chamber (60) which is created in the upper part of upper channel (7) and inside which said solid / gas separation device is to be found.

10. Device according to claim 9, in which said solid / gas separation device (61) is of the cyclone type and includes a duct for removal of solid particles held back by said device, whose length is defined so that its bottom end plunges into said suspension when it is in a state of potential fluidization.

11. Device according to claim 9 or 10, in which said solid / gas separation device (61) includes an inlet pipe and a substantially cylindrical wall (610), the inlet pipe being made so that a gas charged with solid particles arrives tangentially onto said substantially cylindrical wall, said substantially cylindrical wall having a height defined so that its bottom part plunges into the suspension (12') in the upper channel when the latter is in a state of potential fluidization.

12. Device according to any of claims 9 to 11, in which said solid / gas separation device has an inlet opening (130) for a gas charged with solid particles, whose diameter is calculated so that the intake velocity of said gas to be de-dusted ranges between 2 and 40 m/s, said device being designed so that the diameter of the inlet opening, adapted to make said separating device operate properly, contributes to the total pressure drop aimed at to reach the required bubble pressure.

13. Device according to claim 12, in which an outlet pipe (31) of said solid / gas separation device is provided with an escape valve (131) whose variable opening makes it possible to control the bubble pressure $p_{b1}$.

14. Device according to any of claims 9 to 13, in which said solid / gas separation device is composed of several devices of the cyclone type (61, 62) assembled in series.

15. Device according to any of claims 1 to 14 **characterized in that** it includes an end box (300), provided with a substantially vertical end column (9'), directed upwards, in which the powder can rise as a result of the fluidization gas pressure, a by-pass (9") allowing the powder to be dumped out, said by-pass (9") being connected to said end column (9'), at an altitude slightly higher than that of the upper wall (14) of the upper channel (7) and chosen so that the junction can be under the upper level (15.3) of the suspension comprising powder and gas.

16. Device according to claim 15, in which said end column (9') is surmounted by an upper wall (14') provided with a means of creating pressure drop, so that a bubble under pressure can be established below said upper wall, at a given bubble pressure.

17. Device according to claim 15 or 16, in which, at the level of said end box (300), a zone (6.2) of the lower channel is separately supplied with fluidization gas to get a fluidization pressure $p_{f2}$ different from pressure $p_{f1}$ prevailing in the rest (6.1) of the lower channel.

18. Device according to any of claims 15 to 17 in which the bottom of the upper channel of the end box (300) is also provided with a means of removal, located slightly above the porous wall (5).

19. Device according to any of claims 1 to 18 **characterized in that** said upper channel (7) is compartmentalized so that it has n adjacent bubbles (20.1, ... 20.i, ... 20.n) at respective pressures $p_{bi}$, i varying from 1 to n, the upper wall (14) of the upper channel (7) being provided with barriers (50.i, 50.n) separating said bubbles, each related bubble (20.i, i=1 to N) being provided with a means of creating pressure drop, such as an escape valve (140.i), and **in that** at least two compartments of the upper channel (7) corresponding to two adjacent bubbles (20.i, 20. (i+1)) are provided with means of creating pressure drop (140.i, 140. (i+1)) so that the pressure drop at the outlet of the downstream bubble (20.i) is greater than the pressure drop at the outlet of the upstream bubble (20. (i+1)) and **in that** a passage is made between said adjacent bubbles, which makes it possible to compensate for the difference between the leakage rate of the means of removal of said adjacent bubbles, said passage having a section such that fluidization gas passes through this passage at a velocity close to or lower than the fluidization velocity.

20. Device according to claim 19 in which said passage is an upside-down U-shaped pipe (150.i) placed on the air chute so that the branches of the U are on either side of said barrier (50.i) separating said adjacent bubbles (20.i and 20. (i+1)), said branches of the U being of sufficient length for their ends to emerge in the potential fluidization suspension.

**Figure 1 (art antérieur)**

**Figure 2**

**Fig. 3**

**Fig.4**

**Fig.5**

**Fig.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 179055 A
- US 4016053 A
- EP 0179055 A
- EP 1086035 B
- WO 2009010667 A
- EP 1086035 A